# EUROPEAN PATENT APPLICATION

(11) **EP 2 998 926 A1**
(43) Date of publication of application: **23.03.2016**
(21) Application number: 15179476.5
(22) Date of filing: 03.08.2015
(51) Int. Cl.: G06T 5/00, G06T 11/00, G06T 11/60

(54) **PORTRAIT GENERATING DEVICE AND PORTRAIT GENERATING METHOD**

(30) Priority: 08.09.2014 JP 2014182553
(71) Applicant: Omron Corporation, Kyoto-shi, Kyoto 600-8530 (JP)
(72) Inventor: Kato, Yoshiko, Kyoto-shi, Kyoto 600-8530 (JP); Zhang, Lizhou, Kyoto-shi, Kyoto 600-8530 (JP); Irie, Atsushi, Kyoto-shi, Kyoto 600-8530 (JP)
(74) Representative: Kilian Kilian & Partner

(57) **Abstract**

One aspect of the present invention provides a technology of performing desired correction without losing a personal identity in producing a portrait from a facial image. A portrait generating device includes: an image acquisition unit configured to acquire a facial image in which an object person is photographed; an image correction unit configured to generate a corrected facial image by performing correction processing on the facial image, at least a part of the face being corrected in the correction processing; and a portrait generator configured to generate a portrait of the object person using the corrected facial image.

## Description

### CROSS-REFERENCE TO RELATED APPLICATION

This application is based on Japanese Patent Application No. 2014-182553 filed with the Japan Patent Office on September 8, 2014, the entire contents of which are incorporated herein by reference.

### FIELD

The present invention relates to a technology of producing a portrait from a facial image.

### BACKGROUND

There is well known a technology of automatically or semi-automatically producing a portrait through computer image processing based on image data obtained by photographing a face. For example, Unexamined Japanese Patent Publication No. 2004-288082 discloses a portrait producing method. In the method, a feature amount such as a facial organ (such as eyes, a nose, and a mouth), a contour, and a hair style is extracted from the facial image, and a proper part is selected and arranged from many previously-prepared portrait parts based on the feature amount, thereby producing the portrait. Although various methods for producing the portrait from the image are proposed, the methods are in common in that the portrait is produced so as to resemble the face of the input image as much as possible. However, a user does not always like the portrait in which the original face is faithfully reproduced. For example, even if the portrait in which a part of the eye is reduced is presented to a person who has an inferiority complex about narrow eyes, possibly user's satisfaction is not gained. It is undesirable that the portrait in which the contour is increased than usual is produced due to use of the image in which the swelled face is photographed. A user's expectation is also betrayed when a feature that the user considers as charming point is not reflected in the portrait.

Therefore, conventionally a size and an arrangement of the part are corrected after the production of the portrait in order to produce the portrait suitable for the user. Unexamined Japanese Patent Publication No. 2004-110728 proposes a method for automatically correcting an aspect ratio, an area, and an angle of the part such as the contour and the eye so as to be brought close to previously-prepared ideal values.

However, in the method for correcting the part after the production of the portrait, a change desired by the user is hardly reflected on the portrait while a personal identity is kept. This is because information indicating a facial feature of the user is substantially lost at the time the portrait is produced (that is, the time only the feature of each part is extracted from the facial image). For example, in the case that the correction expanding the eyes is performed on the portrait, there is a possibility of losing the personal identify in an expression around the eye because information amount of the portrait is smaller than that of the original image (for example, eye bags are eliminated). In the case that the correction reducing the face is performed on the portrait, there is a possibility of losing the personal identify in an expression of a cheek because the information amount of the portrait is smaller than that of the original image (for example, shading is eliminated).

### SUMMARY

An object of the present invention is to provide a technology of performing the desired correction without losing the personal identity in producing the portrait from the facial image.

In accordance with one aspect of the present invention, a portrait generating device includes: an image acquisition unit configured to acquire a facial image in which an object person is photographed; an image correction unit configured to generate a corrected facial image by performing correction processing on the facial image, at least a part of the face being corrected in the correction processing; and a portrait generator configured to generate a portrait of the object person using the corrected facial image.

In the configuration, by performing the correction processing on the original facial image, for example, the portion about which the object person has the inferiority complex is corrected or the facial feature of the object person is emphasized, so that the portrait suitable for the preference of the object person can be generated. Additionally, the correction processing is performed on (not the portrait but) the original facial image, so that the correction can be performed without losing the information amount on the personal facial feature. Accordingly, the portrait in which the desired correction processing is performed without losing the personal identity can be obtained.

Preferably the portrait generator extracts a face-associated feature amount from the corrected facial image, and generates the portrait of the object person based on the extracted feature amount. Therefore, the portrait on which the post-correction facial feature is properly reflected can be obtained.

Preferably the portrait generating device further includes a correction content designating unit configured to cause a user to designate a content of the correction processing performed on the facial image. At this point, the image correction unit corrects the facial image according to the correction processing content that is designated by the user in the correction content designating unit. Therefore, because the user can designate the correction processing content, the portrait can be provided in compliance with the user's desire.

Preferably the portrait generating device further includes an estimator configured to estimate at least one of an attribute and a state of the object person based on the facial image. At this point, the correction content designating unit changes the correction processing content designable by the user according to an estimation result of the estimator. Therefore, the designable correction processing content is changed according to the attribute or state of the object person, and the proper correction is recommended for the user, so that reduction of a manipulation load on the user and improvement of usability can be achieved.

Preferably the portrait generating device further includes a salient portion specifying unit configured to specify a salient portion having saliency in the face of the object person based on the facial image. At this point, the correction content designating unit changes the correction processing content designable by the user according to a specification result of the salient portion specifying unit. Therefore, the correction processing is performed on the salient portion in the face of the object person, so that the portrait in which the facial feature of the object person is emphasized or the portrait in which the portion about which the object person has the inferiority complex is inconspicuous can be generated.

Preferably the portrait generating device further includes an estimator configured to estimate at least one of an attribute and a state of the object person based on the facial image. At this point, the image correction unit changes a content of the correction processing performed on the facial image according to an estimation result of the estimator. Therefore, the correction processing content is automatically decided according to the attribute or state of the object person, so that the manipulation load on the user can be eliminated to smoothly generate the portrait in a short time.

Preferably the portrait generating device further includes a salient portion specifying unit configured to specify a salient portion having saliency in the face of the object person based on the facial image. At this point, the image correction unit changes a content of the correction processing performed on the facial image according to a specification result of the salient portion specifying unit. Therefore, the correction processing is performed on the salient portion in the face of the object person, the portrait in which the facial feature of the object person is emphasized or the portrait in which the portion about which the object person has the inferiority complex is inconspicuous can be generated. Additionally, the correction processing content is automatically decided according to the salient portion, so that the manipulation load on the user can be eliminated to smoothly generate the portrait in a short time.

Preferably the portrait generating device further includes another person's an image acquisition unit configured to acquire a facial image of another person. At this point, the image correction unit corrects the facial image of the object person such that the face in the facial image of the object person resembles a face in the facial image of another person. Therefore, the portrait that looks like a face of another person such as a famous person can be produced while the personal identity is kept.

The present invention can also be understood as a portrait generating device including at least a part of the above configuration or function or an electronic instrument including the portrait generating device. The present invention can also be understood as a portrait generating method including at least a part of the above pieces of processing, a program causing a computer to perform the portrait generating method, or a computer-readable recording medium in which the program is non-transiently recorded.

In the present invention, the desired correction can be performed without losing the personal identity in producing the portrait from the facial image.

### BRIEF DESCRIPTION OF THE DRAWINGS

Fig. 1 is a block diagram schematically illustrating a configuration of a portrait generating device according to a first embodiment;
Fig. 2 is a flowchart of portrait generating processing of the first embodiment;
Fig. 3 is a view illustrating examples of an original facial image, a post-correction facial image, and a portrait;
Fig. 4 is a block diagram schematically illustrating a configuration of a portrait generating device according to a second embodiment;
Fig. 5 is a flowchart of portrait generating processing of the second embodiment;
Fig. 6 is a view illustrating a screen example of a portrait generating device of the second embodiment;
Fig. 7 is a block diagram schematically illustrating a configuration of a portrait generating device according to a third embodiment;
Fig. 8 is a view illustrating an example of an association table between an estimation result and a content of correction processing in the third embodiment;
Fig. 9 is a flowchart of portrait generating processing of the third embodiment.
Fig. 10 is a view illustrating a screen example of a portrait generating device of the third embodiment;
Fig. 11 is a flowchart of portrait generating processing according to a fourth embodiment;
Fig. 12 is a block diagram schematically illustrating a configuration of a portrait generating device according to a fifth embodiment;
Fig. 13 is a block diagram schematically illustrating a configuration of a portrait generating device according to a sixth embodiment; and
Fig. 14 is a flowchart of portrait generating processing of the sixth embodiment.

### DETAILED DESCRIPTION

The present invention relates to a technology of automatically or semi-automatically generating a portrait through computer image processing based on facial image data obtained by photographing a face. For example, the technology is preferably applied to a portrait producing application and an avatar producing application running on a personal computer, a smartphone, a tablet terminal, a mobile phone, a game machine, and other electronic devices.

### FIRST EMBODIMENT

### (Configuration of portrait generating device)

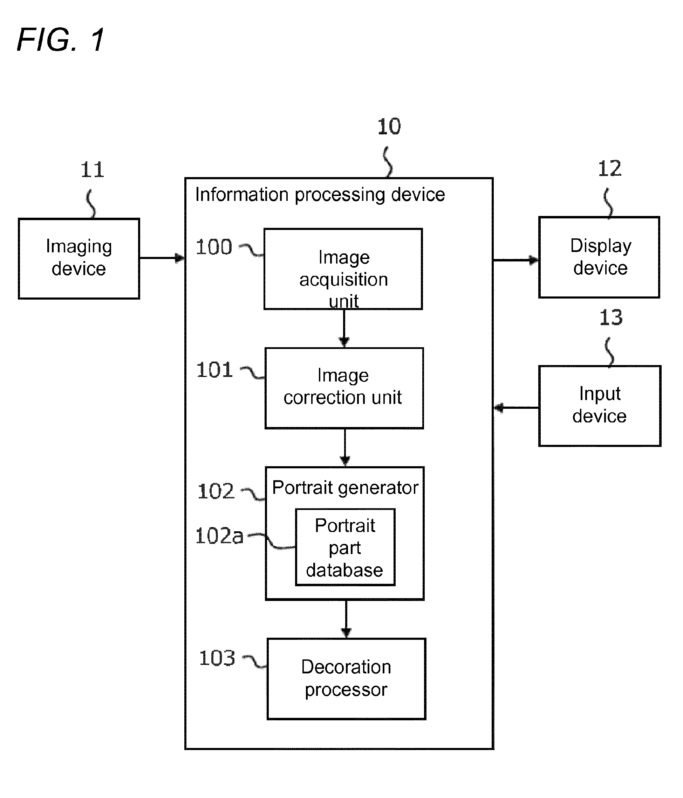

Fig. 1 is a block diagram schematically illustrating a configuration of a portrait generating device according to a first embodiment of the present invention.

The portrait generating device includes an information processing device 10, an imaging device 11, a display device 12, and an input device 13 as main hardware. The information processing device 10 is a computer including a CPU (Central Processing Unit), a RAM (Random Access Memory), and an auxiliary storage device (such as a flash memory and a hard disk). In the first embodiment, by way of example, the portrait generating device is constructed by mounting a portrait producing application on a smartphone. In this case, a built-in camera of the smartphone acts as the imaging device 11, and a touch panel display acts as the display device 12 and the input device 13.

As illustrated in Fig. 1, the information processing device 10 includes an image acquisition unit 100, an image correction unit 101, a portrait generator 102, and a decoration processor 103 as main functions. A program stored in the auxiliary storage device of the information processing device 10 is loaded on the RAM, and executed by the CPU, thereby implementing these functions. A part or all of the functions may be constructed with a circuit such as an ASIC, or processed by another computer (for example, a cloud server).

The image acquisition unit 100 has a function of acquiring data of the facial image that becomes an origin of the portrait. The data of the facial image can be captured from the imaging device 11, or acquired from the auxiliary storage device of the information processing device 10 or a data server on a network.

The image correction unit 101 has a function of performing the correction processing on the facial image. Hereinafter, in order to distinguish a pre-correction image and a post-correction image from each other, the pre-correction facial image is referred to as an "original facial image", and the post-correction facial image is referred to as a "corrected facial image."

Any piece of processing may be mounted as the correction processing as long as at least a part of the face is corrected or modified through the processing. Specific examples of the processing include skin beautifying correction in which a rough skin, macula, and a wrinkle are removed or made inconspicuous, skin whitening correction changing brightness or tint of the skin, eye correction in which the eyes are expanded or narrowed or a double eyelid is formed, small face correction reducing the contour of the face, pupil correction in which catchlight is composed in a pupil or the pupil is expanded, nose correction changing a size or a height of a nose, mouth correction changing tint or gloss of a lip and teeth or a size of a month, and makeup processing of applying cheek rouge, eyeshadow, and mascara. Any technique including a well-known technique may be used in these pieces of correction processing. For example, the skin beautifying correction can be performed by blurring processing using a Gaussian filter, and the skin whitening correction can be performed by adjusting lightness or color balance. Plural feature points (such as an end point and a center point of the facial organ and a point on the contour) are detected from the facial image, and the image is deformed such that the feature points are moved to desired positions, which allows performance of the correction for size-changing, deforming, and moving the facial organ (such as the eyes, the nose, and the mount) or the contour (for example, see Unexamined Japanese Patent Publication No. 2011-233073). For example, a method disclosed in Unexamined Japanese Patent Publication Nos. 2012-256130 and 2012-190287 can be adopted for the correction of the lip or teeth, and a method disclosed in Unexamined Japanese Patent Publication Nos. 2012-98808 and 2012-95730 can be adopted for the makeup processing.

The portrait generator 102 has a function of generating the portrait from the facial image. A portrait generating algorithm is roughly divided into a technique of performing filter processing or subtractive color processing on the facial image to process the image in an illustration style and a technique of extracting the face-associated feature amount from the facial image to generate the portrait based on the feature amount. Both the techniques may be used, and the latter is used in the first embodiment. This is because the portrait on which the corrected facial feature is more properly reflected can be obtained. The portrait generator 102 includes a portrait part database 102a in which part groups of the facial organs (such as the eyes, the nose, the mouth, and eyebrows), the contours, the hair styles, and the like are registered. In the database 102a, such plural kinds of parts as long-slitted eyes, round eyes, hog-backed eyes, a single eyelid, and a double eyelid are prepared with respect to one region.

The decoration processor 103 has a function of adding various decorations to the portrait generated by the portrait generator 102. Examples of the addition of the decoration include a change of a background, a change of clothes, and addition of accessory or taste information.

### (Operation of portrait generating device)

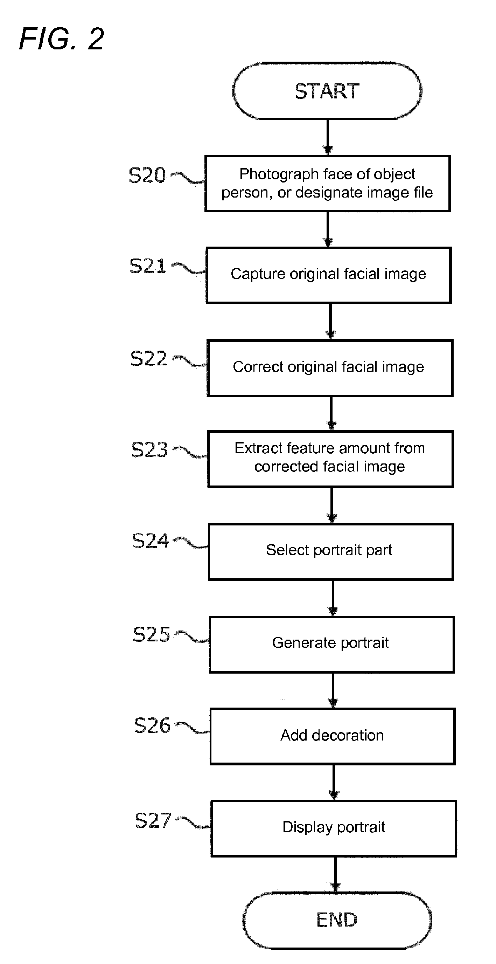

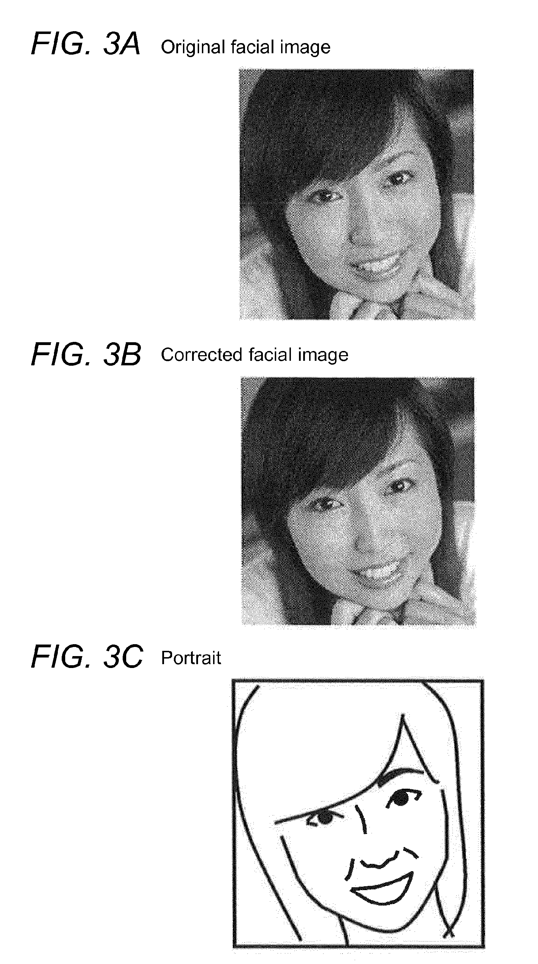

A flow of portrait generating processing performed by the portrait generating device will be described with reference to a flowchart in Fig. 2 and an image example in Fig. 3.

The user photographs the face of the object person (either the user or another person) with the imaging device 11, or manipulates the input device 13 to designate an image file stored in the auxiliary storage device or data server (Step S20). The image acquisition unit 100 captures the data of the original facial image (Step S21). Fig. 3A illustrates an example of the original facial image.

The image correction unit 101 performs predetermined correction processing on the original facial image to generate the corrected facial image (Step S22). At this point, it is assumed that nose reducing correction slightly reducing the size of the nose is performed by way of example. Fig. 3B is an example of the corrected facial image after the nose reducing correction.

The portrait generator 102 extracts the feature amount of each region constituting the face from the corrected facial image generated in Step S22 (Step S23). Examples of the region include the facial organ (such as the eyes, the nose, the mouth, and the eyebrows), the contour of the face, and the hairstyle. Any face-associated feature amount such as a shape feature of HOG or SURF, a color histogram, shading, the size, a thickness, and a gap may be used as the feature amount. The portrait generator 102 selects a part in which the feature is best matched from the portrait part database 102a based on the feature amount of each region (Step S24), and generates the data of the portrait by a combination of the parts (Step S25). Fig. 3C illustrates the portrait that is generated using the corrected facial image in Fig. 3B.

After the decoration processor 103 properly adds the decoration (Step S26), the final portrait is displayed on the display device 12 (Step S27).

In the processing of the first embodiment, by performing the correction processing on the original facial image, for example, the portion about which the object person has an inferiority complex is corrected, and the facial feature of the object person is emphasized, so that the portrait suitable for the preference of the object person can be generated. Additionally, the correction processing is performed on (not the portrait but) the original facial image, so that the correction can be performed without losing the information amount on the personal facial feature. Accordingly, the portrait in which the desired correction processing is performed without losing the personal identity can be obtained.

In the first embodiment, the nose reducing correction is illustrated as the correction processing. Alternatively, another piece of correction processing may be applied, or not only one kind of correction processing but also plural kinds of correction processing may be applied. Although not illustrated in the flowchart of Fig. 2, as needed basis, the user may be caused to check the original facial image or the corrected facial image while the original facial image or the corrected facial image is displayed on the display device 12.

### SECOND EMBODIMENT

In the first embodiment, the predetermined kind of correction processing is applied to the original facial image. On the other hand, in a second embodiment, the user can designate the correction processing desired by the user. A unique configuration and processing of the second embodiment will mainly be described below, the configuration and processing similar to those of the first embodiment are designated by the identical numeral, and the detailed description is omitted.

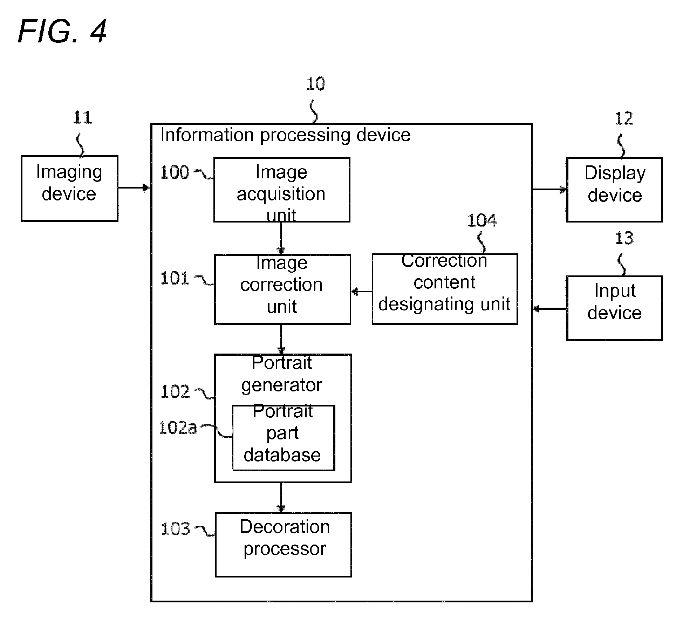

Fig. 4 is a block diagram schematically illustrating a configuration of a portrait generating device according to a second embodiment of the present invention. The second embodiment differs from the first embodiment (Fig. 1) in that the information processing device 10 includes a correction content designating unit 104 that causes the user to designate the content of the correction processing performed on the original facial image. As used herein, the correction processing content means a kind (also referred to as a correction item) and a correction amount (also referred to as a degree of correction) of the correction processing.

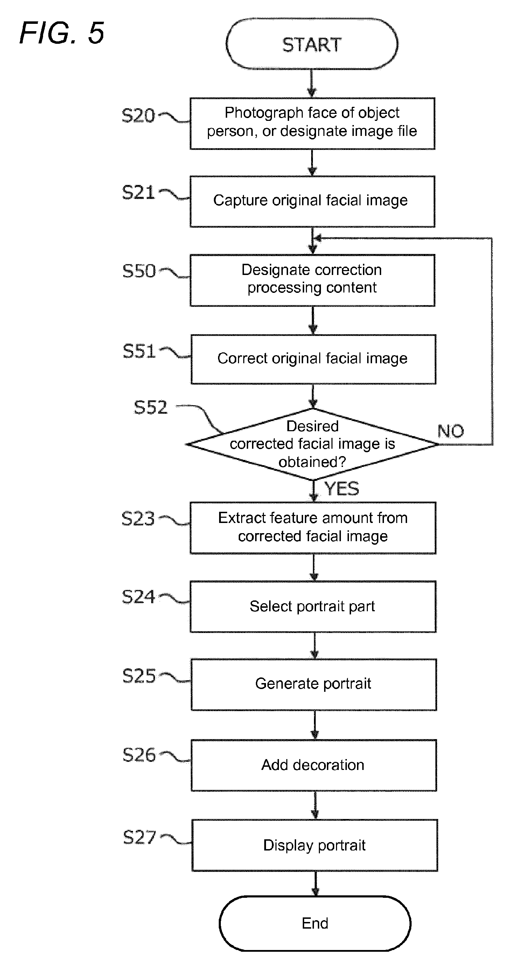

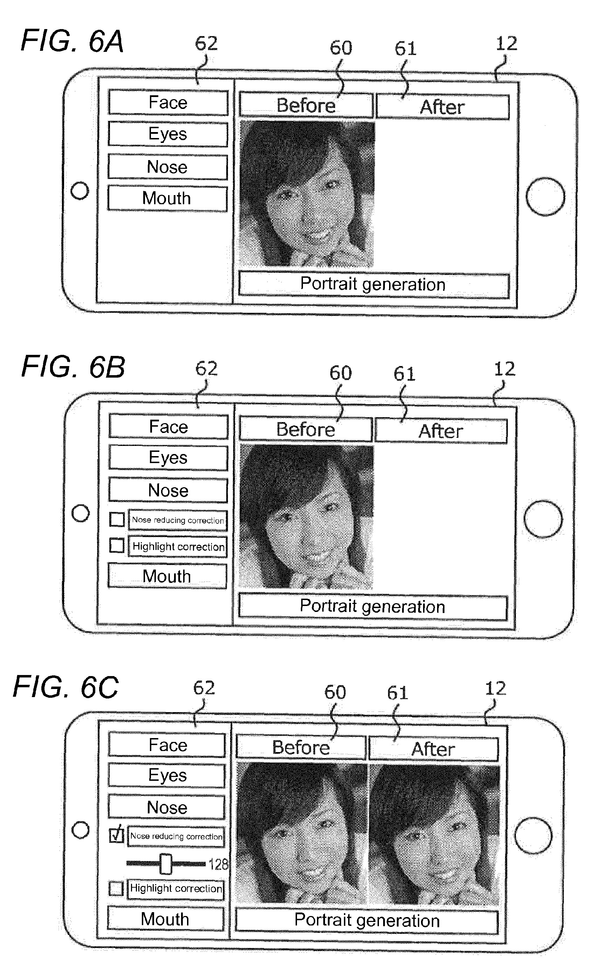

A flow of portrait generating processing of the second embodiment will be described with reference to a flowchart in Fig. 5 and an image example in Fig. 6.

Similarly to the first embodiment, the image acquisition unit100 reads the data of the image photographed by the imaging device 11 or the data of the stored image (Steps S20 and S21). The read original facial image is displayed on the display device 12 as illustrated in Fig. 6A. In the example of Fig. 6A, a display area 60 of the original facial image, a display area 61 of the corrected facial image, and a GUI (Graphical User Interface) 62 designating the correction processing content are arranged in the screen.

The user can designate the desired correction processing content by touching the GUI 62 (Step S50). The specific manipulation is performed as follows. The user selects the region to be corrected from a menu (face, eyes, nose, and mouth) of the GUI 62. For example, when "nose" is selected, correction items associated with "nose" are displayed as illustrated in Fig. 6B. "Nose reducing correction" is the correction processing of changing the size of the whole nose, and "highlight correction" is the correction processing of adjusting the lightness of a bridge of the nose to make the nose look higher. When the user checks the desired correction item, a slider is displayed in order to input the degree of correction as illustrated in Fig. 6C. The degree of correction can be adjusted when the slider is horizontally moved. In the example of Fig. 6C, when the slider is moved toward the right, the degree of correction is increased, namely, the change is increased from the original facial image.

In response to the user's manipulation of the GUI 62, the image correction unit 101 applies the correction processing having the designated content to the original facial image to generate the corrected facial image (Step S51). The generated corrected facial image is displayed on the display area 61 as illustrated in Fig. 6C. The user can easily check the correction in compliance with the user's desire by comparing the pre-correction and post-correction images displayed on the display areas 60 and 61 to each other. When the desired corrected facial image is not obtained, the user may input the correction item and the degree of correction again to finely adjust the correction (NO in Step S52).

When the user touches a "portrait generation" button (YES in Step S52) after the corrected facial image is obtained in compliance with the user's desire, the portrait generator 102 generates the portrait using the corrected facial image (Steps S23 to S25). The subsequent pieces of processing are similar to those of the first embodiment.

The effect similar to the first embodiment can be obtained in the processing of the second embodiment. Additionally, in the second embodiment, because the user can be caused to designate the correction processing content, there is an advantage that the portrait can be provided in compliance with the user's desire.

In the second embodiment, the nose reducing correction is illustrated as the correction processing. Alternatively, another piece of correction processing may be applied, or not only one kind of correction processing but also plural kinds of correction processing may be applied. The GUI illustrated in Fig. 6 shows only by way of example, and any GUI may be used as long as the user can perform the designation and the check.

### THIRD EMBODIMENT

In the second embodiment, the user can designate the correction processing desired by the user. On the other hand, in a third embodiment, an attribute or a state of the face is estimated, and the designable correction processing is changed (restricted) according to an estimation result. A unique configuration and processing of the third embodiment will mainly be described below, the configuration and processing similar to those of the first and second embodiments are designated by the identical numeral, and the detailed description is omitted.

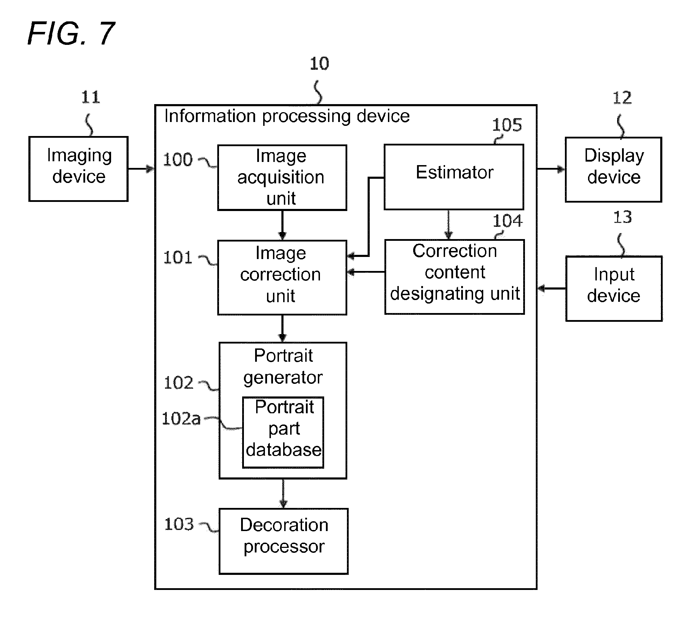

Fig. 7 is a block diagram schematically illustrating a configuration of a portrait generating device according to the third embodiment of the present invention. The third embodiment differs from the second embodiment (Fig. 4) in that the information processing device 10 includes an estimator 105 that estimates the attribute or state of the face of the object person included in the facial image. The attribute means a unique character included in the object person or the face of the object person. Examples of the attribute include age, a period, sexuality, and race. The state means an appearance (how the object person is photographed) in the image of the face of the object person included in the facial image. Examples of the state include an expression, a smile, and a facial direction. The items listed above are examples of the attribute and state, and any attribute or state may be estimated as long as the item is information that can be estimated from the image. Only one item may be estimated from one facial image, or plural items may be estimated. The plural items may be the items of only the attribute, the items of only the state, and a combination of the items of the attribute and state. Any technique including a well-known technique may be used as processing of estimating the attribute or state. For example, a method disclosed in Unexamined Japanese Patent Publication Nos. 2008-282089 and 2009-230751 can be adopted in the estimation of the age or period, and a method disclosed in Unexamined Japanese Patent Publication No. 2005-266981 can be adopted in the estimation of the race. The sexuality can be estimated from the feature (such as existence or non-existence of beard or mustache, existence or non-existence of Adam's apple, existence or non-existence of makeup, a hairstyle, and clothes) extracted from the image. The expression, the smile, and facial orientation can be estimated from a positional relationship between the facial organs (for example, see International Patent Publication No. 2006/051607).

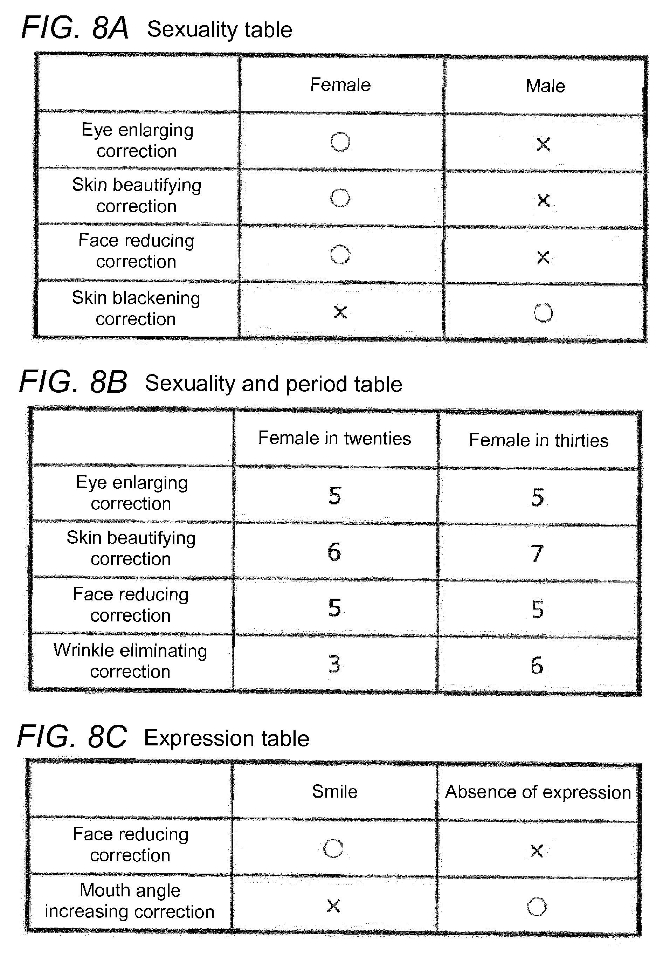

Fig. 8 illustrates examples of an association table between the estimation result and the correction processing content, the association table being included in the estimator 105. Fig. 8A illustrates an example of a sexuality table, and a correction item applied to the case of "female" and a correction item applied to "male" are defined, respectively. In the example of Fig. 8A, eye enlarging correction, the skin beautifying correction, and the face reducing correction are applied in the case that the object person is "female", and suntan correction blackening a skin color is applied in the case that the object person is "male". Fig. 8B illustrates an example of a sexuality and period table, and the correction processing contents for "female in twenties" and "female in thirties" are defined. A numerical value set in each correction item is an upper limit (10 is the maximum value) of the degree of correction. In the example of Fig. 8B, the degrees of correction of the skin beautifying correction and wrinkle eliminating correction for "female in thirties" can be set higher than those for "female in twenties". Fig. 8C illustrates an example of an expression table, and a correction item applied to the case of "smile" and a correction item applied to the case of "absence of expression" are defined. In the example of Fig. 8C, the wrinkle eliminating correction is applied in the case that the object person is "smile", and mouth angle increasing correction is applied in the case of "absence of expression". When the association table is previously prepared, according to the estimation result of the attribute or state, the correction item can be changed or an adjustment width of the degree of correction can be changed.

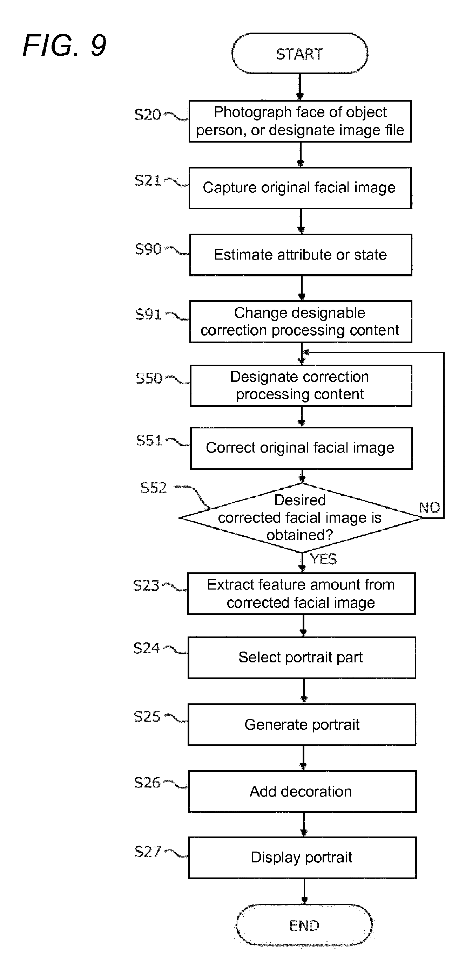

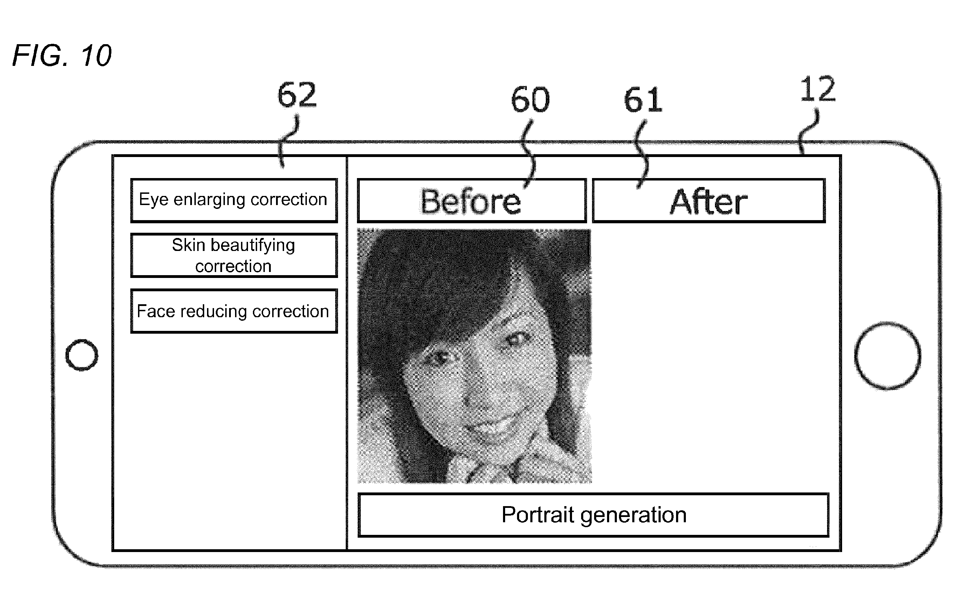

A flow of portrait generating processing of the third embodiment will be described with reference to a flowchart in Fig. 9 and an image example in Fig. 10.

Similarly to the second embodiment, the image acquisition unit 100 reads the image photographed with the imaging device 11 or the stored image data (Steps S20 and S21). The estimator 105 performs predetermined processing of estimating the attribute or state from the read original facial image (Step S90), and changes the correction processing content designable by the user according to the estimation result (Step S91). At this point, by way of example, the designable correction item is changed from sexuality estimation result and the association table in Fig. 8. Fig. 10 illustrates a screen example of the read original facial image and the GUI designating the correction processing. In Fig. 10, as a result that the original facial image is estimated to be the face of "female", the correction item that can be selected from the GUI is set to "eye enlarging correction", "skin beautifying correction", and "face reducing correction". The subsequent pieces of processing are similar to those of the second embodiment.

The effect similar to the second embodiment can be obtained in the processing of the third embodiment. Additionally, in the third embodiment, designable correction processing content is changed according to the attribute or state of the object person, and the proper correction item and degree of correction may be recommended for the user, so that there is an advantage that the reduction of the manipulation load on the user and the improvement of the usability can be achieved.

The GUI illustrated in Fig. 10 is an example, and any GUI may be used as long as the user can perform the designation and the check. The association table illustrated in Fig. 8 is an example, and any table may be used as long as the association relationship between the attribute or state and the correction processing content is defined.

### FOURTH EMBODIMENT

In the third embodiment, the designable correction processing content is changed (restricted) according to the estimation result of the attribute or state of the face. In a fourth embodiment, the correction processing content is automatically decided according to the estimation result of the attribute or state of the face. A unique configuration and processing of the fourth embodiment will mainly be described below, the configuration and processing similar to those of the first to third embodiments are designated by the identical numeral, and the detailed description is omitted.

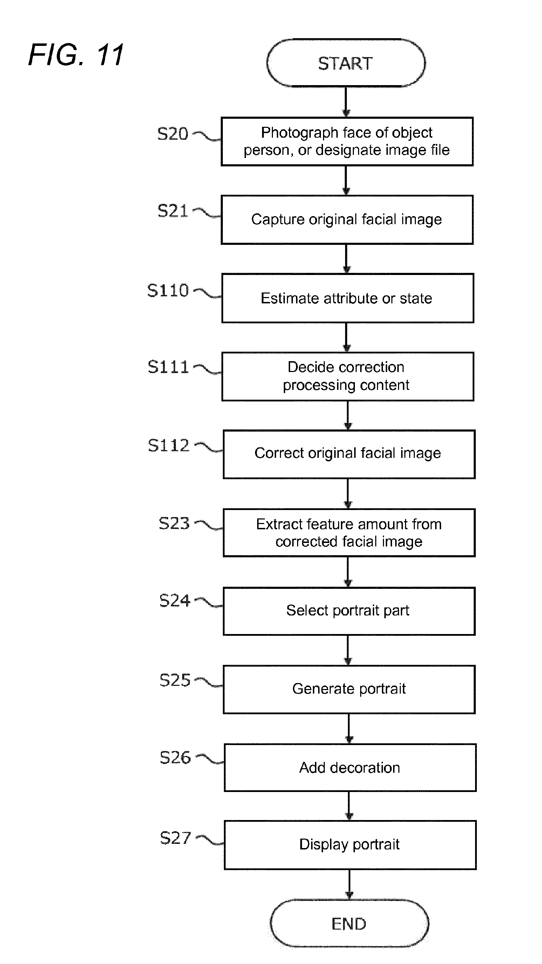

Fig. 11 illustrates a flow of portrait generating processing of the fourth embodiment. The device configuration of the fourth embodiment may be identical to that of the third embodiment (Fig. 7).

Similarly to the third embodiment, the image acquisition unit 100 reads the image photographed with the imaging device 11 or the stored image data (Steps S20 and S21). The estimator 105 performs the predetermined processing of estimating the attribute or state from the read original facial image (Step S110), and decides the content of the correction processing performed on the original facial image according to the estimation result (Step S111). For example, three kinds of correction processing, namely, "eye enlarging correction", "skin beautifying correction", and "face reducing correction" are selected when the original facial image is estimated to be the face of "female" as a result of using the sexuality estimation result and the association table in Fig. 8A.

The image correction unit 101 performs the correction processing selected in Step S111 on the original facial image, and generates the corrected facial image (Step S112). The subsequent pieces of processing are similar to those of the third embodiment.

The effect similar to the third embodiment can be obtained in the fourth embodiment. Additionally, in the fourth embodiment, because the correction processing content can automatically be decided according to the attribute or state of the object person, there is an advantage that the manipulation load on the user can be eliminated to smoothly generate the portrait in a short time.

### FIFTH EMBODIMENT

The estimation result of the attribute or state of the face is used in the third and fourth embodiments. On the other hand, in a fifth embodiment, a portion (salient portion) having saliency in the face of the object person is used to change (restrict) the correction processing content. A unique configuration and processing of the fifth embodiment will mainly be described below, the configuration and processing similar to those of the first to fourth embodiments are designated by the identical numeral, and the detailed description is omitted.

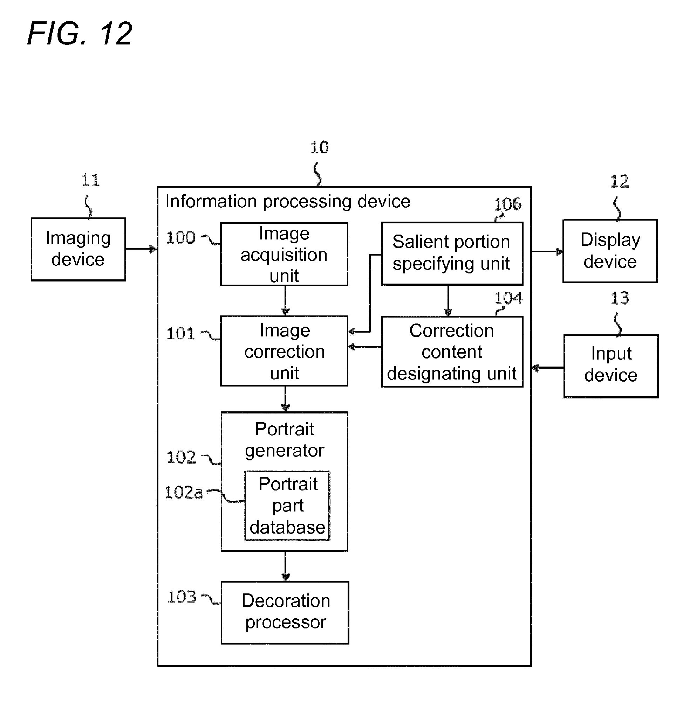

Fig. 12 is a block diagram schematically illustrating a configuration of a portrait generating device according to a fifth embodiment of the present invention. The fifth embodiment differs from the third embodiment (Fig. 7) in that the information processing device 10 includes a salient portion specifying unit 106 instead of the estimator 105. The saliency means one that has discriminability for other portions to easily attract person's (observer's) attention, and the saliency is frequently used in the field of image recognition. For example, a person who has eyes larger than those of other persons, a person having a long chin, and a person having a conspicuous mole attract person's attention, and remain easily in person's memory. In producing the portrait, the portrait in which the feature of the object person is well captured can be obtained when the portion (salient portion) easily attracting person's attention in the face is utilized or emphasized. In contrast, there is a possibility that the salient portion causes the inferiority complex of the person. Accordingly, it is considered that the correction processing performed on the salient portion includes correction enhancing the saliency in order to emphasize the facial feature and correction lowering the saliency in order to hide the inferiority complex portion. Both the corrections may be used depending on device design.

Any technique including a well-known technique may be adopted in the salient portion specifying processing. A feature amount (referred to as an average feature amount) in each region (the facial organ and the contour) of an average face is previously in the salient portion specifying unit 106 of the fifth embodiment, and the salient portion specifying unit 106 specifies the region as the salient portion when detecting the region in which a degree of deviation between the feature amount extracted from the original facial image and the average feature amount is larger than a predetermined value. For example, in the case that a distance between the right and left eyes of the object person is much wider than a distance of the average face, the concerned region is detected as the salient portion. The degree of deviation of the feature amount may be estimated by a difference between the two feature amounts or a ratio of the feature amounts in the case that the feature amount is a scalar, and the degree of deviation of the feature amount may be estimated by an Euclidean distance in a feature amount space or a product of two vectors in the case that the feature amount is a vector.

After the salient portion specifying unit 106 specifies the salient portion, the correction content designating unit 104 may change the designable correction processing content according to a specification result of the salient portion like the third embodiment, or the image correction unit 101 may change the content of the correction processing performed on the original facial image according to the specification result of the salient portion like the fourth embodiment. In the former case, an association table in which the specification result of the salient portion and the correction processing content are associated with each other is prepared instead of the association table in Fig. 8, and the pieces of processing in Steps S90 and S91 of Fig. 9 may be replaced with "processing of specifying the salient portion from the original facial image" and "processing of changing the correction processing content designable by the user according to the specification result", respectively. In the latter case, the pieces of processing in Steps S110 and S111 of Fig. 11 may be replaced with "processing of specifying the salient portion from the original facial image" and "processing of deciding the content of the correction processing performed on the original facial image according to the specification result", respectively.

The effect similar to the third and fourth embodiments can be obtained in the fifth embodiment. Additionally, in the fifth embodiment, the portrait in which the feature of the person is emphasized or the portrait in which the portion about which the person has the inferiority complex is inconspicuous can be generated because the correction processing is performed on the salient portion in the face of the object person.

### SIXTH EMBODIMENT

In the first to fifth embodiments, the correction item and the degree of correction are automatically or semi-automatically decided. In a sixth embodiment, the correction is performed such that the face in the facial image of the object person resembles the face in the facial image of another person using the facial image of another person. Therefore, the portrait that resembles the face of another person while the personal identity remains can be generated. For example, the method of the sixth embodiment can be applied to such an application that the portrait like a famous person is produced. A unique configuration and processing of the sixth embodiment will mainly be described below, the configuration and processing similar to those of the first to fifth embodiments are designated by the identical numeral, and the detailed description is omitted.

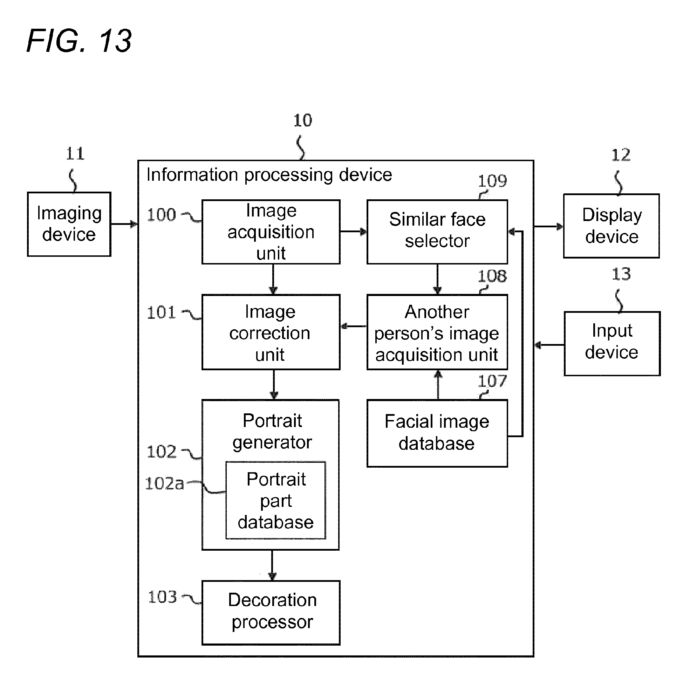

Fig. 13 is a block diagram schematically illustrating a configuration of a portrait generating device according to a sixth embodiment of the present invention. The sixth embodiment differs from the first embodiment (Fig. 1) in that the information processing device 10 includes a facial image database 107, another person's image acquisition unit 108, and a similar face selector 109.

The facial image database 107 is a database in which the facial images of plural persons are registered. For example, the facial images of many famous persons may previously be registered. The other person's image acquisition unit 108 acquires another person's facial image (referred to as a target facial image) that is a correction target from the facial image database 107. Which face is selected as the target facial image may arbitrarily be designated from the facial image database 107 by the user or the other person's image acquisition unit 108 may recommend options and cause the user to make the selection from the options. The similar face selector 109 has a function of selecting the facial image of another person resembling the face of the object person as the recommending option. By applying a face recognition technology, similarity between the two faces can be estimated from similarity between the feature amount extracted from the original facial image of the object person and the feature amount extracted from the facial image of another person. For example, the similar face selector 109 may compare the feature amount of the face of the object person to the feature amount of each face registered in the facial image database 107, and select the face having a degree of similarity larger than a predetermined value as the similar face.

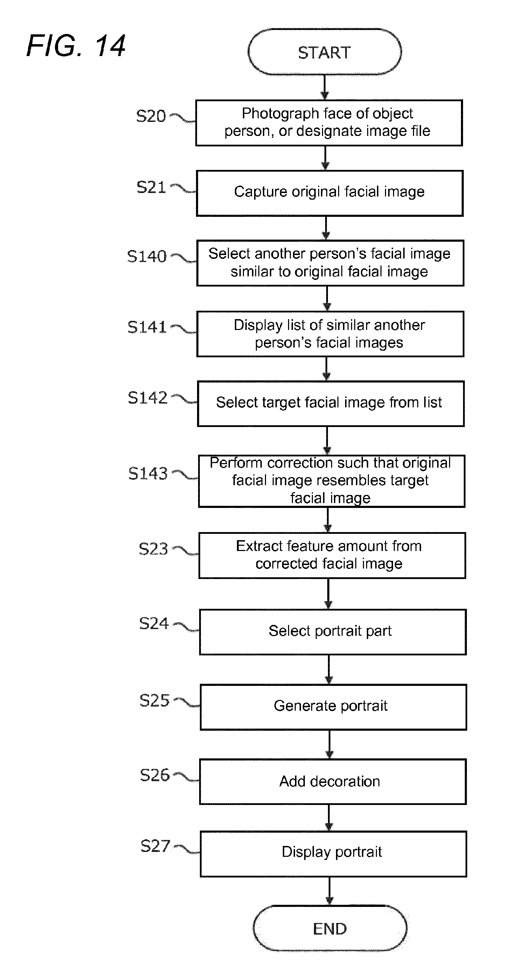

Fig. 14 illustrates a flow of portrait generating processing of the sixth embodiment. Similarly to the first to fifth embodiments, the image acquisition unit 100 reads the image photographed with the imaging device 11 or the stored image data (Steps S20 and S21). The similar face selector 109 selects the other person's facial image similar to the read original facial image from the facial image database 107 (Step S140). The other person's image acquisition unit 108 displays a list of the other person's facial images selected in Step S140 on the display device 12, and encourages the user to select the target facial image (Step S141). When the user selects the desired target facial image from the options (Step S142), the image correction unit 101 corrects the original facial image such that the face in the original facial image resembles the face in the target facial image, and generates the corrected facial image (Step S143). Specifically, the processing such that the original facial image is deformed or the lightness or tint of the original facial image is brought close to that of the target facial image are conceivable such that the position of the feature point in the original facial image comes close to the position of the feature point in the target facial image. The pieces of processing subsequent to the acquisition of the corrected facial image are similar to those of the first to fifth embodiments.

The effect similar to the first to fifth embodiments can be obtained in the sixth embodiment. Additionally, in the sixth embodiment, the portrait that resembles the face of the famous person while the personal identity remains can be generated. In the sixth embodiment, because the face similar to the face of the object person is selected and recommended, there is an advantage that the proper target facial image can easily be selected even if the user has no self-awareness of whom resembles the user. Alternatively, the user may designate the facial image of any person as the target facial image without recommending the similar face.
For example, even if the user selects the face of the person who does not resemble the user at all as the target facial image, the unique portrait can be expected to be obtained

### OTHER EMBODIMENTS

The configurations of the first to sixth embodiments of the present invention are described only by way of example, but the first to sixth embodiments are not limited to the scope of the present invention. Various modifications can be made without departing from the technical thought of the present invention.

## Claims

1. A portrait generating device comprising:
an image acquisition unit configured to acquire a facial image in which an object person is photographed;
an image correction unit configured to generate a corrected facial image by performing correction processing on the facial image, at least a part of the face being corrected in the correction processing; and
a portrait generator configured to generate a portrait of the object person using the corrected facial image.

2. The portrait generating device according to claim 1, wherein the portrait generator extracts a face-associated feature amount from the corrected facial image, and generates the portrait of the object person based on the extracted feature amount.

3. The portrait generating device according to claim 1 or 2, further comprising a correction content designating unit configured to cause a user to designate a content of the correction processing performed on the facial image,
wherein the image correction unit corrects the facial image according to the correction processing content that is designated by the user in the correction content designating unit.

4. The portrait generating device according to claim 3, further comprising an estimator configured to estimate at least one of an attribute and a state of the object person based on the facial image,
wherein the correction content designating unit changes the correction processing content designable by the user according to an estimation result of the estimator.

5. The portrait generating device according to claim 3, further comprising a salient portion specifying unit configured to specify a salient portion having saliency in the face of the object person based on the facial image,
wherein the correction content designating unit changes the correction processing content designable by the user according to a specification result of the salient portion specifying unit.

6. The portrait generating device according to claim 1 or 2, further comprising an estimator configured to estimate at least one of an attribute and a state of the object person based on the facial image,
wherein the image correction unit changes a content of the correction processing performed on the facial image according to an estimation result of the estimator.

7. The portrait generating device according to claim 1 or 2, further comprising a salient portion specifying unit configured to specify a salient portion having saliency in the face of the object person based on the facial image,
wherein the image correction unit changes a content of the correction processing performed on the facial image according to a specification result of the salient portion specifying unit.

8. The portrait generating device according to claim 1 or 2, further comprising an another person's image acquisition unit configured to acquire a facial image of another person,
wherein the image correction unit corrects the facial image of the object person such that the face in the facial image of the object person resembles a face in the facial image of another person.

9. A portrait generating method comprising:
a step in which a computer acquires a facial image in which a face of an object person is photographed;
a step in which the computer generates a corrected facial image by performing correction processing on the facial image, at least a part of the face being corrected in the correction processing; and
a step in which the computer generates a portrait of the object person using the corrected facial image.

10. A program configured to cause a computer to perform the steps of the portrait generating method according to claim 9.
